# EUROPÄISCHE PATENTSCHRIFT

(11) **EP 1 066 690 B1**
(45) Veröffentlichungstag und Bekanntmachung des Hinweises auf die Patenterteilung: **18.06.2003**
(21) Anmeldenummer: 99910349.2
(22) Anmeldetag: 16.03.1999
(51) Int. Cl.: H04B 3/54, H02J 13/00, G08B 1/08

(54) **VERFAHREN ZUR STEUERUNG WENIGSTENS EINES MIT EINER STEUERUNGSEINRICHTUNG VERBUNDENEN ELEKTRISCHEN VERBRAUCHERS UND ENTSPRECHENDE SCHALTUNGSANORDNUNG**
METHOD FOR CONTROLLING AT LEAST ONE ELECTRIC CONSUMER CONNECTED TO A CONTROL DEVICE, AND A CORRESPONDING CIRCUIT
PROCEDE POUR COMMANDER UN CONSOMMATEUR ELECTRIQUE RACCORDE A UNE UNITE DE COMMANDE, ET CIRCUIT CORRESPONDANT

(30) Priorität: 31.03.1998 DE 19814366
(43) Veröffentlichungstag der Anmeldung: 10.01.2001
(73) Patentinhaber: CEAG Sicherheitstechnik GmbH, 59494 Soest (DE)
(72) Erfinder: PRASUHN, Jürgen, D-59494 Soest (DE)
(74) Vertreter: Grünecker, Kinkeldey, Stockmair & Schwanhäusser Anwaltssozietät
(86) Internationale Anmeldenummer: EP9901725
(87) Internationale Veröffentlichungsnummer: WO99050971

(56) Entgegenhaltungen:
- DE-A- 2 835 549
- DATABASE WPI Section EI, Week 9320 Derwent Publications Ltd., London, GB; Class W02, AN 93-159721 XP002900523 & CA 2 050 383 A (ATTALLAH A S), 1. März 1993 (1993-03-01)

## Beschreibung

Die Erfindung betrifft ein Verfahren zur Steuerung wenigstens eines mit einer Steuerungseinrichtung über elektrische Versorgungsleitungen verbundenen elektrischen Verbrauchers, wobei ein Steuersignal über die elektrischen Versorgungsleitungen an den elektrischen Verbraucher übertragen wird. Weiterhin betrifft die Erfindung eine Schaltungsanordnung mit einer Steuerungseinrichtung und wenigstens einem mit dieser über Versorgungsleitungen verbundenen elektrischen Verbraucher, wobei die Versorgungsspannung zur Übertragung eines Steuersignals zwischen Steuerungseinrichtung und elektrischem Verbraucher veränderbar ist.

Ein entsprechendes Verfahren, beziehungsweise Schaltungsanordnung ist aus der EP 0 557 256 B1 bekannt. Bei dem bekannten Verfahren, beziehungsweise Schaltungsanordnung ist eine Kontroll- und Verarbeitungsstation mit einem Stromnetz als Versorgungsleitung verbunden. Über das Stromnetz werden entsprechende Signale an Anwesenheitserfassungssensoren als Verbraucher übermittelt oder von diesen empfangen. Zur Übermittlung der Signale werden diese dem in den Versorgungsleitungen fließenden Wechselstrom überlagert. Entsprechende Einrichtungen zur Überlagerung und zur Wiedergewinnung der Signale sowie zur Vermeidung von Störungen oder Interferenzen in den Versorgungsleitungen sind ebenfalls vorgesehen.

Weiterhin ist ein Verfahren und eine Schaltungsanordnung bekannt, siehe EP 0 537 651 B1, bei denen entsprechende Signale zwischen einer Steuerungs- und Überwachungseinrichtung und Notleuchten als Verbrauchern über separat zu Versorgungsleitungen angeordnete Datenleitungen übertragen werden.

Bei dem Stand der Technik nach EP 0 557 256 ergibt sich ein relativ hoher und kostenintensiver Schaltungsaufwand. Weiterhin ist die Art und Anzahl der an die speisende Spannung angeschlossenen Verbraucher eine zu beachtende Einflußgröße bezüglich Qualität und Sicherheit der Daten- beziehungsweise Signalübertragung, da die zusätzlichen Einrichtungen zur Vermeidung von Störung oder Interferenzen in den Versorgungsleitungen dämpfend wirken und somit ein entsprechendes Nutzsignal negativ beeinflussen. Außerdem treten weitere Beeinflussungen dieser Nutzsignale durch andere Systeme auf, die ebenfalls mittels Hochfrequenz Daten über die Versorgungsleitungen übertragen, wie Rundsteueranlagen und Babyruf. Schließlich sind noch die physikalischen Grenzen dieses Verfahrens zu beachten, die dazu führen, daß ein Nutzsignal abhängig von der gewählten Frequenz nach wenigen hundert Metern nicht mehr vorhanden ist.

Werden solche vorbekannten Schaltungsanordnungen mit einer Gleichspannung versorgt, sind Filter (Induktivitäten) erforderlich, die vor entsprechend niederohmigen Komponenten (Batterie und Funkentstörkondensatoren in den Verbrauchern) geschaltet werden müssen, um eine unzulässige Belastung des entsprechenden Nutzsignals und damit eine Verringerung der Übertragungsqualität zu verhindern. Solche Filter sind allerdings relativ groß und teuer, da sie für eine hohe Gleichstromvormagnetisierbarkeit dimensioniert werden müssen.

Bei dem Stand der Technik nach EP 0 537 651 ist offensichtlich von Nachteil, daß separate ein- oder mehradrige Datenleitungen zusätzlich verlegt werden müssen, wodurch entsprechende Kosten verursacht werden.

Aus CA-A-2 050 383 oder aus DE-A-2 835 549 ist bereits bekannt, daß ein kodiertes signal auf das Netz gegeben wird. Beim Verbraucher reagiert ein Detektor oder ein Decoder gemäß dem Rodierten signal, um z.B. den Verbraucher ein - oder abzuschalten. Bei diesem Stand der Technik kann jedoch nicht zwischen verschiedenen Verbrauchern der gleichen Art oder zwischen verschiedenen Verbrauchern mit dem gleichen Detecktor bzw. Decoder unterschieden werden.

Ausgehend vom nächstliegenden Stand der Technik nach EP 0 557 256 liegt der Erfindung die Aufgabe zugrunde, ein entsprechendes Verfahren und eine entsprechende Schaltungsanordnung dahingehend zu verbessern, daß bei vereinfachtem Aufbau und geringeren Kosten eine Daten- oder Signalübermittlung in sicherer und einfacher Weise auch über große Entfernungen möglich ist.

Diese Aufgabe wird verfahrensgemäß im Zusammenhang mit den Merkmalen des Oberbegriffs des Anspruchs 1 dadurch gelöst, daß die Steuerungseinrichtung zur Kodierung des Steuersignals eine an den elektrischen Verbraucher über die elektrische Versorgungsleitungen übertragene Versorgungsspannung modifiziert. Insbesondere wird die Versorgungsspannung für eine bestimmte Zeitdauer in ihrem Maximalwert verändert und/oder unterbrochen. Vorrichtungsgemäß erfolgt die Lösung im Zusammenhang mit einer Schaltungsanordnung mit den Merkmalen des Oberbegriffs des Anspruchs 19 dadurch, daß zumindest der Steuerungseinrichtung wenigstens ein Spannungsabfallbauelement und/oder eine Schalteinrichtung zur zeitweisen Änderung eines Maximalwertes der Versorgungsspannung und/oder zur zeitweisen Unterbrechung der Versorgungsspannung zugeordnet ist.

Durch die direkte Beeinflussung der Versorgungsspannung zur Kodierung von Daten ohne zusätzliche Datenleitungen zu den Verbrauchern oder Überlagerung hoch- oder niederfrequenter Signalspannungen werden das Verfahren und die Schaltungsanordnung vereinfacht und gleichzeitig ist die Schaltungsanordnung kostengünstiger. Die Versorgungsspannung wird dadurch direkt beeinflußt, daß deren Maximalwert verändert wird, in dem beispielsweise ein Spannungsabfallbauteil zur Signal- beziehungsweise Datenübertragung zu- oder abgeschaltet wird. Bei Zuschaltung eines solchen Spannungsabfallbauelements wird der Maximalwert der Versorgungsspannung herabgesetzt durch den entsprechend über dem Bauelement erfolgenden Spannungsabfall. Dies kann sowohl bei Wechsel- als auch Gleichspannung erfolgen, wobei bei einer Wechselspannung die maximale Amplitude entsprechend vermindert wird. Weiterhin kann bei einer anderen Ausführungsform der Erfindung die Signal- beziehungsweise Datenübertragung zum Verbraucher durch Abschalten des Spannungsabfallbauelements erfolgen, so daß in diesem Fall der Maximalwert während der Signalübertragung größer als bei Normalbetrieb ist. Allerdings ergibt sich bei dem letzteren Ausführungsbeispiel eine erhöhte Verlustleistung, da das Spannungsabfallbauelement während des Normalbetriebs (keine Signalübertragung) vom Verbraucherstrom durchflossen wird.

Außerdem kann alternativ zur Veränderung des Maximalwertes der Versorgungsspannung oder auch zusätzlich zu dieser Veränderung eine Unterbrechung der Versorgungsspannung erfolgen. Dazu kann eine entsprechende Schalteinrichtung zur zeitweisen Unterbrechung der Versorgungsspannung der Steuerungseinrichtung zugeordnet sein. Länge und/oder Anzahl solcher Unterbrechungen der Versorgungsspannung können die dem Steuerssignal entsprechende Information, beziehungsweise Daten beinhalten. Außerdem kann bei Verwendung sowohl der Änderungen des Maximalwerts als auch der Unterbrechung der Versorgungsspannung die Information des Steuersignals in beiden Änderungen der Versorgungsspannung kodiert sein.

Die Unterbrechung beziehungsweise Beeinflussung der Versorgungsspannung kann auch in einer solchen Weise erfolgen, daß dort eine insbesondere aus einer Wechselspannung als Versorgungsspannung abgeleitete Halbwellenspannung bereitgestellt wird. .Diese Halbwellenspannung kann durch die positiven Halbwellen und die in positive Halbwellen umgewandelten negativen Halbwellen der Wechselspannungsversorgung gebildet sein.

Erfindungsgemäß ist es nicht notwendig, das gesamte Steuersignal in einer Maximalwertänderung oder einer Unterbrechung der Versorgungsspannung zu kodieren. Statt dessen kann zur Kodierung des Steuersignals die Maximalwertänderung und/oder die Unterbrechung der Steuerspannung mehrmals, wenigstens zweimal, hintereinander erfolgen. In diesem Zusammenhang können beispielsweise die hintereinander erfolgenden Maximalwertänderungen auch unterschiedliche Änderungen des Maximalwerts aufweisen. Dies kann beispielsweise dadurch erfolgen, daß das Spannungsabfallbauelement durch einen, zwei oder mehrere wahlweise stromdurchflossene Widerstände gebildet ist. Bei einem weiteren Ausführungsbeispiel kann das Spannungsabfallbauelement in analoger Weise durch zwei oder mehr wahlweise stromdurchflossene antiparallel gestaltete Dioden gebildet sein.

Um insbesondere Versorgungsspannungsabschnitte mit veränderten Maximalwerten deutlicher voneinander trennen zu können, kann zwischen zwei aufeinanderfolgenden, zur Kodierung des Steuersignals veränderten Versorgungsspannungsabschnitten jeweils ein unveränderter Versorgungsspannungsabschnitt übertragen werden. Ebenso ist es möglich, daß eine Unterbrechung der Versorgungsspannung zwei in ihrem Maximalwert veränderte Versorgungsspannungsabschnitte voneinander trennt.

Bei einem vereinfachten Verfahren gemäß der Erfindung, beziehungsweise bei einem vereinfachten Aufbau der entsprechenden Schaltungsanordnung kann die Maximalwertänderung in jedem entsprechenden Versorgungsspannungsabschnitt um einen festen Wert der ΔU erfolgen. Eine solche feste Änderung ergibt sich dadurch, daß jeweils ein entsprechendes Spannungsabfallbauelement zu- beziehungsweise abgeschaltet wird. Dieses Schalten des Spannungsabfallbauelements kann beispielsweise durch eine zu diesem parallel geschaltete Schalteinrichtung erfolgen. Ist die Schalteinrichtung im geschlossenen Zustand, ist das Spannungsabfallbauelement kurzgeschlossen, so daß sich keine Maximalwertänderung der Versorgungsspannung ergibt. Ist die Schalteinrichtung im offenen Zustand, fließt ein entsprechender Strom durch das Spannungsabfallbauelement und ein Spannungsabfall tritt auf, der zu einer Verminderung des Maximalwerts der Versorgungsspannung führt. In diesem Zusammenhang ist zu beachten, daß beispielsweise auch mehrere Schalteinrichtungen vorgesehen sein können, um entsprechende Widerstände oder antiparallel geschalltete Diodenpaare als Spannungsabfallbauelemente getrennt zu- oder abzuschalten und ebenfalls eine dieser Schalteinrichtungen zur Unterbrechung der Spannungsversorgung ein- oder ausgeschaltet werden kann.

Vorteilhafterweise kann eine Unterbrechungsschalteinrichtung wenigstens einer Versorgungsleitung zum Ein- und Ausschalten der Versorgungsspannung zugeordnet sein.

In einem einfachen Ausführungsbeispiel kann die Kodierung des Steuersignals durch unterschiedliche Zeitlängen der Versorgungsspannungsabschnitte mit verändertem Maximalwert oder der Abschnitte mit unterbrochener Versorgungsspannung erfolgen. Das heißt, die Steuerungseinrichtung kann zur Kodierung des Steuersignals die Versorgungsspannungsabschnitte mit Maximalwertveränderung und/oder Versorgungsspannungsunterbrechung mit unterschiedlichen Zeitdauern übertragen. Um dies in einfacher Weise insbesondere direkt in der Steuerungseinrichtung durchführen zu können, kann diese zumindest zur Betätigung der Schaltungseinrichtung zur Kodierung des Steuerungssignals eine Steuerelektronik aufweisen.

Um durch eine solche Steuerelektronik in einfacher Weise die Schalteinrichtung betätigen zu können, kann diese mindestens ein elektromechanischer oder elektronischer Schalter sein.

Bei entsprechenden Verfahren und Schaltungsanordnungen werden in der Regel eine Mehrzahl von Verbrauchern von der Steuerungseinrichtung gesteuert und gegebenenfalls überwacht. Solche Verbraucher können beispielsweise Notleuchten, Sicherheitsleuchten, Rettungsweganzeigeleuchten oder auch verschiedene Sensoren wie Feuersensor, Anwesenheitssensor, und andere Verbraucher sein. Bei solchen Schaltungsanordnungen ist zu beachten, daß diese in der Regel sowohl für Wechsel- als auch Gleichspannung ausgelegt sind. Eine Gleichspannungsversorgung wird insbesondere im Notfall, das heißt bei Ausfall der Wechselspannungsversorgung, eingesetzt. Für die Gleichspannungsversorgung können beispielsweise Batterien oder Akkumulatoren in der Steuerungseinrichtung enthalten oder dieser zugeordnet sein.

Um bei einer Mehrzahl von Verbrauchern einen bestimmten Verbraucher zu steuern oder zu überwachen, kann jedem Verbraucher eine verbraucherspezifische Adresse zugeordnet sein. Eine solche Adresse kann fest beispielsweise durch die Steuerungseinrichtung vorgegeben oder variabel mit einem Kodierschalter eingestellt werden. Der Kodierschalter kann am Verbraucher angeordnet sein. Weiterhin besteht die Möglichkeit, daß bei Initialisierung der Schaltungsanordnung sich jeder Verbraucher eine beispielsweise von der Steuerungseinrichtung zur Verfügung gestellte Adresse selbst zuordnet und über diese Zuordnung der Steuerungseinrichtung berichtet.

Dem Verbraucher kann dabei ein Hilfsmodul zugeordnet sein, das zumindest die über die Versorgungsleitungen erhaltenen Steuersignale dekodiert und gegebenenfalls digitalisiert. Weiterhin kann das Hilfsmodul auch zur Speicherung oder Einstellung der verbraucherspezifischen Adresse eingesetzt werden. Das Hilfsmittel kann als externe Baugruppe ausgebildet sein.

Die entsprechende verbraucherspezifische Adresse ist in dem Steuersignal enthalten, so daß der ausgewählte Verbraucher beispielsweise mittels eines Hilfsmoduls seine Auswahl erkennt und entsprechend reagiert. Das Hilfsmodul kann auch Teil des Verbrauchers, das heißt in ihm integriert sein. Entsprechende weitere Einrichtungen können im Hilfsmodul enthalten sein, wie beispielsweise eine Digitalsiereinrichtung, ein Vollweggleichrichter bei Versorgungsspannung im Wechselstrombetrieb oder dergleichen.

Bei einem weiteren Ausführungsbeispiel der Erfindung kann statt eines Aufrufens der verschiedenen Verbraucher mittels der entsprechenden Adressen auch eine Übertragung von Steuersignalen zu diesen Verbrauchern dadurch erfolgen, daß jeder Verbraucher in einem ihm zugeordneten Zeitfenster sein Steuersignal empfängt. Dabei erfolgt in der Regel eine entsprechende Synchronisierung der Zeitfenster mit der Übermittlung der Steuersignale, so daß bei Empfang eines Verbrauchers in seinem Zeitfenster zu diesem Zeitpunkt das zugehörige Steuersignal von der Steuerungseinrichtung übertragen wird. Die entsprechenden Zeitfenster können dabei zeitlich periodisch zugeordnet werden.

Wie bereits vorangehend angedeutet, können Spannungsabfallbauelemente und/oder Schalteinrichtungen zeitlich variabel von der Steuerungseinrichtung betätigbar sein.

Um neben einer Signal- oder Datenübermittlung von der Steuerungseinrichtung zu den Verbrauchern eine entsprechende Übermittlung auch in umgekehrter Richtung zu ermöglichen, kann beispielsweise ein Verbraucher oder das diesem zugeordnete Hilfsmodul eine Belastungsstromimpulserzeugungseinrichtung zur Übermittlung von entsprechenden Stromimpulsen an die Steuereinrichtung aufweisen. Diese Stromimpulse werden über die Spannungsversorgungsleitungen übertragen und von der Steuerungseinrichtung mittels der Steuerelektronik oder einer gegebenenfalls zusätzlich angeordneten Wandlereinrichtung zur Umsetzung der Stromimpulse in ein Informationssignal empfangen. Die Wandlereinrichtung kann beispielsweise als Fühlerwiderstand ausgebildet sein, der den Stromimpuls erfaßt und an die Steuerelektronik übermittelt. Anschließend kann der Stromimpuls in eine digitale Information umgewandelt werden.

Wie bereits eingangs ausgeführt, kann die Kodierung des Steuersignals auch durch Unterbrechungen der Versorgung in der Gestalt erfolgen, daß zwischen unveränderten, beziehungsweise unmodifizierten Abschnitten der Versorgungsspannung nur positive oder negative Halbwellen übertragen werden. In diesem Zusammenhang ist es auch möglich, daß in Art einer Gleichrichtung der Versorgungswechselspannung sowohl deren positive als auch negative Anteile in Form von positiven oder negativen Halbwellen doppelter Frequenz im Vergleich zu den positiven beziehungsweise negativen Anteilen der Versorgungswechselspannung übertragen werden. Im Vergleich zu den bisher beschriebenen Arten der Kodierung mittels Amplitudenmodulation oder tatsächlicher Unterbrechung der Versorgungswechselspannung im bestimmten Takt, kann die Aufeinanderfolge von Halbwellen und Vollwellen als Pulsmodulation angesehen werden.

Im folgenden werden vorteilhafte Ausführungsbeispiele der Erfindung anhand der in der Zeichnung beigefügten Figuren näher erläutert und beschrieben.

Es zeigen:
- Figur 1: eine Prinzipskizze einer erfindungsgemäßen Schaltungsanordnung;
- Figur 2: eine Prinzipskizze eines Teils einer Steuerungseinrichtung gemäß der Erfindung;
- Figur 3: eine Prinzipskizze eines einem Verbraucher zugeordneten Hilfsmoduls;
- Figuren 4a bis 4c: eine Kodierung und Dekodierung eines Informations- beziehungsweise signals gemäß einem ersten Ausführungsbeispiel der Erfindung;
- Figuren 5a bis 5c: ein zweites Ausführungsbeispiel einer Kodierung/Dekodierung eines Informationssignals gemäß der Erfindung;
- Figuren 6a u. 6b: ein drittes Ausführungsbeispiel einer Kodierung/Dekodierung eines Informationssignals gemäß der Erfindung;
- Figur 7: eine Prinzipskizze eines weiteren Ausführungsbeispiels eines Teils der Steuerungseinrichtung gemäß der Erfindung, und
- Figuren 8a bis 8c: ein viertes Ausführungsbeispiel einer Kodierung/Dekodierung eines Informationssignals gemäß der Erfindung.

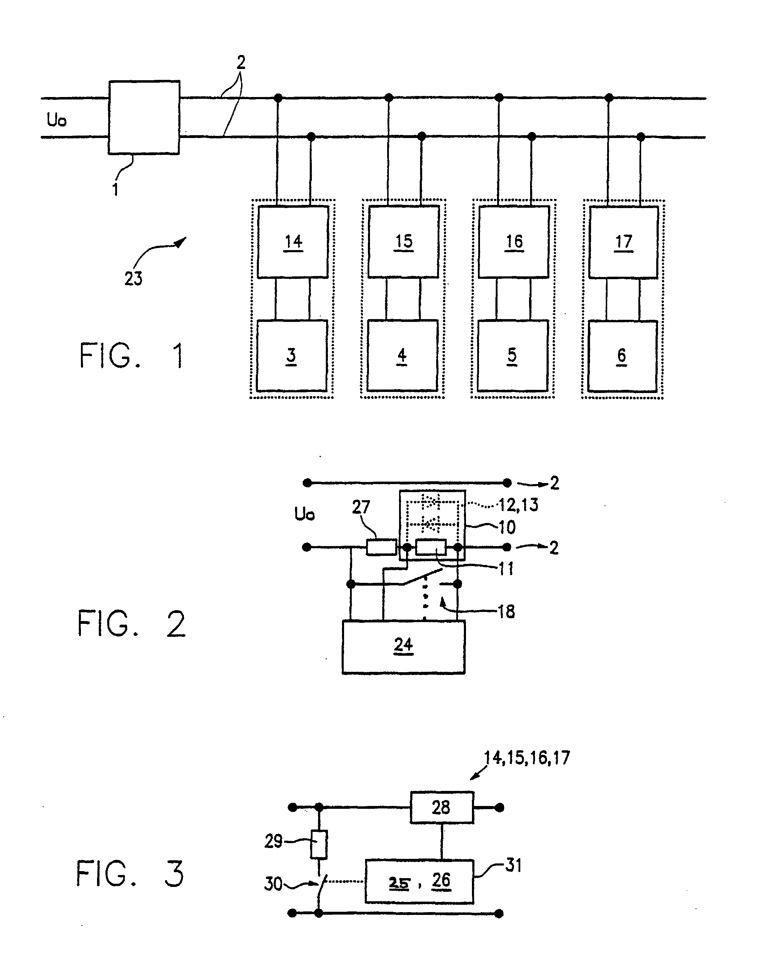

In Figur 1 ist prinzipiell eine Schaltungsanordnung 23 mit Steuerungseinrichtung 1 und einer Vielzahl von Verbrauchern 3, 4, 5 und 6 dargestellt. Die Steuerungseinrichtung 1 weist Eingänge zur Zuführung einer Versorgungsspannung und entsprechende mit Versorgungsleitungen 2 verbundene Ausgänge auf. Über die Versorgungsleitungen 2 wird eine entsprechend durch gegebenenfalls die Steuerungseinrichtung 1 veränderte Versorgungsspannung den parallel zu den Versorgungsleitungen 2 verschalteten Verbrauchern 3 - 6 zugeführt.

Jeder der Verbraucher kann zusätzlich oder als Teil des Verbrauchers mit einem Hilfsmodul 14, 15, 16, 17 ausgebildet sein. Dieses ist zwischen eigentlichem Verbraucher und den Versorgungsleitungen 2 geschaltet.

In Figur 2 ist ein Detail der Steuerungseinrichtung 1 prinzipiell und vergrößert dargestellt. Mit zumindest einer Versorgungsleitung 2 ist ein Spannungsabfallbauelement 10 verschaltet, das beispielsweise durch einen Widerstand 11 oder alternativ durch ein Paar antiparallel verschalteter Dioden 12, 13 gebildet sein kann. Ebenso können mehrere der Widerstände 11 hintereinander oder auch parallel zueinander sowie einer oder mehrerer der Widerstände 11 mit einem oder mehreren Paaren der antiparallel verschalteten Dioden 12, 13 zur Bildung eines entsprechenden Spannungsabfallbauelements 10 verschaltet sein.

Parallel zum Spannungsabfallbauelement 10 ist ein Schalter als Schalteinrichtung 18 angeordnet. In der dargestellten offenen Stellung des Schalters fließt ein entsprechender Strom durch das Spannungsabfallbauelement 10, wodurch sich ein Spannungsabfall über diesem Element ergibt. Bei geschlossenem Schalter 18 fließt der Strom durch den Schalter, so daß sich im wesentlichen kein Spannungsabfall beziehungsweise eine Änderung des Maximalwerts der Versorgungsspannung ergibt.

Zur Steuerung des Schalters ist eine Steuerelektronik 24 vorgesehen, die einerseits die Stellung des Schalters 18 bestimmt und andererseits wenigstens mit einer Versorgungsleitung verbunden ist. Durch die Steuerelektronik 24 ist beispielsweise der Spannungsabfall über dem Spannungsabfallbauelement 10 meßbar. Weiterhin ist in Reihe zum Widerstand 11 ein weiterer Widerstand als Wandlereinrichtung 27 verschaltet, wobei der über diesem Widerstand auftretende Spannungsabfall ebenfalls durch Steuerelektronik 24 meßbar ist. Die Wandlereinrichtung 27 dient im wesentlichen als Fühlerwiderstand, um von den Verbrauchern 3 - 6, siehe Figur 1, über die Versorgungsleitungen übermittelte Belastungsstrom-impulse zu erfassen. Dabei kann jeweils nur ein oder es können mehrere Impulse solcher Art von jedem Verbraucher erzeugt werden.

Die erfaßten Belastungsstrom-impulse werden über den Fühlerwiderstand als Wandlereinrichtung 27 der Steuerelektronik 24 zugeführt und dort in beispielsweise digitale Informationssignale umgesetzt. Diese Informationssignale können Charakteristika der Verbraucher darstellen oder von den Verbrauchern erfaßten Daten entsprechen.

An dieser Stelle sei angemerkt, daß beispielsweise an Stelle des Spannungsabfallbauelements 10 der Schalter 18 direkt in der Versorgungsleitung an Stelle beispielsweise des Widerstands 11 angeordnet sein kann, so daß durch Öffnen des Schalters 18 eine Unterbrechung der Versorgungsspannung erfolgt.

Weiterhin sei an dieser Stelle angemerkt, daß die Versorgungsspannung sowohl eine Gleich- als auch Wechselspannung sein kann.

In Figur 3 ist prinzipiell ein Teil eines jeden Hilfsmoduls 14 bis 17 dargestellt. Ein solches Hilfsmodul weist zumindest eine Stelleinrichtung 28, eine Steuerelektronik 31 mit Digitalisiereinrichtung 25 und Vollweggleichrichteinrichtung 26, einen Widerstand 29 und einen Schalter 30 auf. Mittels des Hilfsmoduls ist bei den verschiedenen Ausführungsbeispielen der Erfindung einerseits feststellbar, ob der zugehörige Verbraucher über die ihm zugeordnete Adresse von der Steuereinrichtung 1, siehe Figur 1, aufgerufen wird, oder ob andererseits der zugehörige Verbraucher bei Vorliegen eines ihm zugeordneten Zeitfensters zum Empfang von über die Versorgungsleitungen 2, siehe Figur 1, übertragenen Steuersignale einsatzbereit ist.

Die Aufschaltung des Verbrauchers auf die Versorgungsleitungen zum Empfangen der Informationssignale kann durch Schließen des Schalters 30 erfolgen.

Die entsprechend empfangenen Informationssignale sind in der Steuerelektronik 31 des Hilfsmoduls 14 - 17 bei Spannungsversorgung im Wechselstrombetrieb gleichrichtbar durch die Vollweggleichrichteinrichtung 26 und anschließend digitalisierbar durch die Digitalisiereinrichtung 25. Die auf diese Weise aufbereiteten Steuersignale sind dann an den zugehörigen Verbraucher weiter übertragbar und als Daten oder Informationen auswertbar.

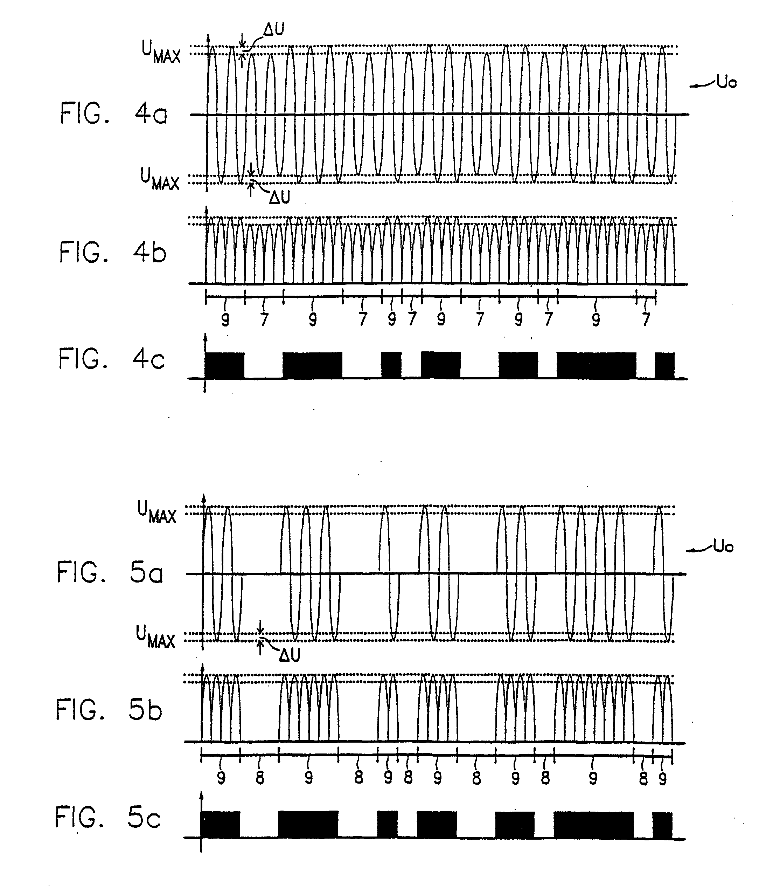

In den Figuren 4a bis 4c ist ein erstes Ausführungsbeispiel zur Übermittlung und Kodierung eines Informationssignals an einen Verbraucher dargestellt. In Figur 4a ist die Versorgungsspannung U₀ dargestellt, wie sie durch Öffnen und Schließen des Schalters 18, siehe Figur 2, in ihrem Maximalwert U_{MAX} veränderbar ist. Dabei entspricht die Veränderung ΔU des Maximalwertes U_{MAX} dem Spannungsabfall über dem Spannungsabfallbauelement 10, siehe ebenfalls Figur 2.

Werden von der Steuerungseinrichtung 1 keine Informationssignale, beziehungsweise Daten übermittelt, so ist das Spannungsabfallbauelement 10 beispielsweise durch die Schalteinrichtung 18 kurzgeschlossen. Wird der entsprechende Schalter geöffnet, ergibt sich das Absinken der Verbraucherspannung, wie oben beschrieben, welches iin den Verbrauchern 3 - 6 oder in dessen Hilfsmodulen 14 - 17 ausgewertet und in ein Digitalsignal umgewandelt werden kann. Bei einer Wechselspannung als Versorgungsspannung U₀ wird gemäß Figur 4b zuerst mittels eines Vollweggleichrichters im Verbraucher, beziehungsweise Hilfsmodul die Versorgungsspannung gleichgerichtet. Die daran anschließende Digitalisierung des gleichgerichteten Spannungssignals ist in Figur 4c dargestellt.

Wie in den Figuren 4a bis 4c zu erkennen ist, erfolgt jeweils eine Verminderung der maximalen Amplitude U_{MAX} der Wechselspannung U₀ um den gleichen Wert ΔU und in jeweils voneinander durch ungeänderte Spannungsabschnitte 9 getrennten Spannungsabschnitten 7. Dabei können die verschiedenen Spannungsabschnitte 7, 9 unterschiedliche Längen aufweisen. Die Längen spiegeln sich wieder in der unterschiedlichen Länge der digitalen Information nach Figur 4c. In dieser digitalen Information ist die an den entsprechenden Verbraucher übermittelte Information enthalten. Weiterhin kann diese digitale Information zusätzlich die entsprechende verbraucherspezifische Adresse zur Auswahl des zugehörigen Verbrauchers enthalten.

Es sei angemerkt, daß die Logik auch umgekehrt einsetzbar ist, das heißt, werden keine Informationssignale von der Steuerungseinrichtung 1 gesendet, ist die Schalteinrichtung 18 geöffnet und das Spannungsabfallbauelement 10 in Einsatz. Während der Übermittlung von Informationssignalen wird dann die Schalteinrichtung 18 geöffnet und geschlossen in Abhängigkeit von dem zu übertragenen Daten, beziehungsweise vom zu übertragenen Bitmuster, siehe Figur 4c.

Bei dieser Variante ergibt sich eine erhöhte Verlustleistung, da im Normalbetrieb, das heißt, wenn keine Datenübertragung erfolgt, das Spannungsabfallbauelement 10 vom Verbraucherstrom durchflossen wird.

Weiterhin sei angemerkt, daß beispielsweise durch Verwenden weiterer Schalteinrichtungen 18 im Zusammenhang mit weiteren Widerständen 11 oder weiteren Paaren von Dioden 12, 13 oder im Zusammenhang mit weiteren Spannungsabfallbauelementen 10 es ebenfalls möglich ist, die Veränderung der Spannungsamplitude U_{MAX} in verschiedene Versorgungsspannungsabschnitten 7 mit unterschiedlichen Änderungen ΔU durchzuführen.

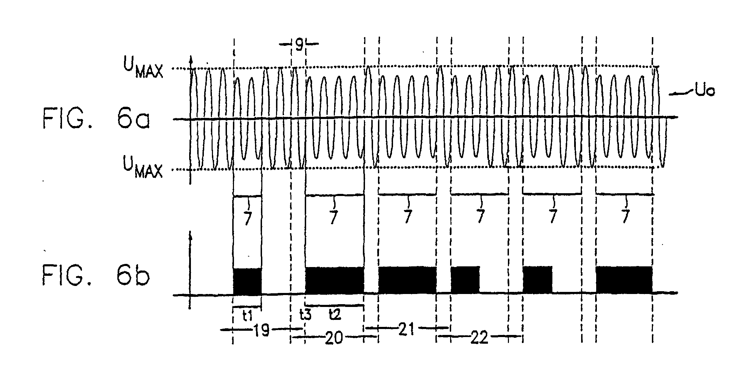

In den Figuren 5a bis 5c ist ein zweites Ausführungsbeispiel dargestellt. Dies unterscheidet sich vom ersten Ausführungsbeispiel darin, daß auf ein Spannungsabfallbauelement 10 verzichtet wird und statt dessen eine Schalteinrichtung zur Unterbrechung der Versorgungsspannung U₀ angeordnet ist. Das von der Steuerungseinrichtung 1 abgegebene Spannungssignal ist in Figur 5a dargestellt. Die Unterbrechungen sind in den Versorgungsspannungsabschnitten 8, siehe auch Figur 5c, dargestellt, in denen die entsprechende Schalteinrichtung geöffnet ist. In den übrigen Versorgungsspannungsabschnitten 9 liegt die normale Versorgungsspannung an. Wiederum kann die Länge der Versorgungsspannungsabschnitte 8 und ebenfalls 9 variiert werden, wodurch sich das in Figur 5c dargestellte Bitmuster nach Digitalisierung des Spannungssignals im Verbraucher, beziehungsweise dessen Hilfsmodul ergibt

Figur 5b entspricht wiederum dem in Figur 5a dargestellten, gleichgerichteten Signal.

In den Figuren 6a und 6b ist ein drittes Ausführungsbeispiel der Erfindung dargestellt. Bei diesem erfolgt eine Änderung der maximalen Spannungsamplitude U_{MAX} in analoger Weise wie im Zusammenhang mit Figur 4a geschildert. Entsprechend zeigt Figur 6a einen ähnlichen Spannungsverlauf wie Figur 4a.

Allerdings erfolgt die Informationssignalübermittlung zu jedem Verbraucher 3 - 6, siehe Figur 1, nicht über eine bestimmte Adresse, sondern zeitsynchronisiert in einem entsprechenden Zeitfenster 19, 20, 21 und 22. Dabei ist beispielsweise das Zeitfenster 19 dem Verbraucher 3, Zeitfenster 20 dem Verbraucher 4, Zeitfenster 21 dem Verbraucher 5 und Zeitfenster 22 dem Verbraucher 6 zugeordnet. In diesen Zeitfenstern 19 bis 22 erfolgt eine Veränderung des Maximalwertes U_{MAX} der Amplitude der Wechselspannung U₀. Dabei erfolgt diese Veränderung gemäß den Figuren 6a und 6b entweder über die Hälfte der Dauer eines Zeitfensters oder über die gesamte Länge eines Zeitfensters, siehe die Zeiten t1 und t2. Weitere Abstufungen der Länge der Änderungen des Spannungssignals sind möglich.

Beispielsweise kann einer Veränderung mit Dauer t1, siehe Zeitfenster 19, die Information "ein" und der Länge t2 im Zeitfenster 20 die Information "aus" entsprechen. Folglich dient das Bitmuster nach Figur 6b zum Ein- und Ausschalten der entsprechenden Verbraucher.

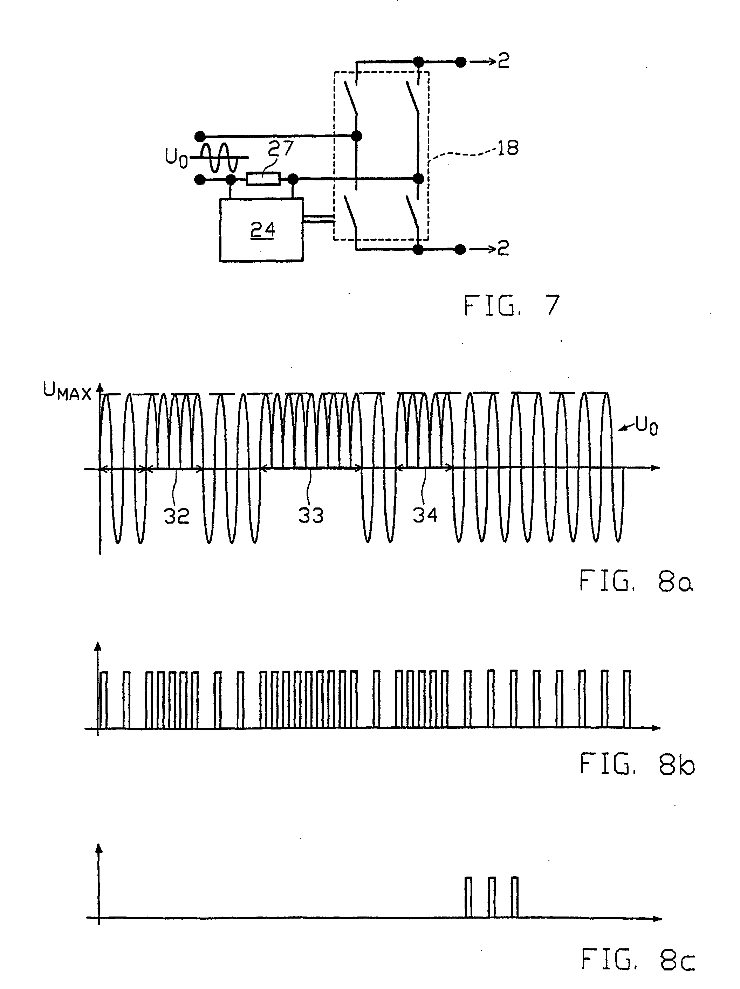

In Figur 7 ist ein weiteres Ausführungsbeispiel für einen Teil der Steuerungseinrichtung 1 dargestellt. Dieser weist eine Steuerelektronik 24 auf, die zu einem Widerstand 27 parallel geschaltet ist. Mit der Steuerelektronik 24 ist weiterhin die Schalteinrichtung 18 verbunden, die aus einer Wechselspannung als Versorgungsspannung U₀ eine aus positiven oder negativen Halbwellen gebildete, pulsierende Gleichspannung erzeugt.

In den Figuren 8a bis 8c ist ein viertes Ausführungsbeispiel für eine Kodierung/Dekodierung eines Informationssignals dargestellt, wie sie mit der Vorrichtung nach Figur 7 möglich ist.

In Figur 8a sind die durch die Steuerelektronik 24 und die Schalteinrichtung 18 nach Figur 7 den Versorgungsspannungsleitungen 2 zugeführten Signale dargestellt. Diese sind durch Vollwellen und Halbwellen der Versorgungswechselspannung U₀ gebildet. Die Halbwellenabschnitte werden durch entsprechendes Umschalten der Schalteinrichtung 18 nach Figur 7 erzeugt, wobei diese im wesentlichen einer gleichgerichteten Versorgungswechselspannung U₀ entsprechen, bei der auch deren negative Halbwellen in positive Halbwellen umgewandelt sind. Die Halbwellenabschnitte 32, 33 und 34 sind in Unterbrechungen der Netzwechselspannung U₀ angeordnet. Diese Halbwellenabschnitte weisen bezüglich der positiven Halbwellen die doppelte Frequenz wie die positiven Halbwellen der Versorgungswechselspannung U₀ auf.

In Figur 8b ist die beispielsweise mittels eines Ausführungsbeispiels nach Figur 3 in den Hilfsmodulen 14 bis 17 der elektrischen Verbraucher 3 bis 6 umgesetzte und empfangene Information in Form von Pulsen dargestellt. Folglich entspricht die Kodierung nach diesem Ausführungsbeispiel einer Pulsmodulation, wobei jeweils einer positiven Halbwelle nach Figur 8a ein Puls nach Figur 8b von im wesentlichen gleicher Länge zugeordnet ist.

Die Information kann in an sich bekannter Weise mittels der Pulsmodulation kodiert sein.

In Figur 8c ist weiterhin ein vom Verbraucher an die Steuerungseinrichtung 1, siehe Figur 1, übermitteltes Signal dargestellt, das dort über den Widerstand 27 mittels der Steuerelektronik 24 abgreifbar ist. Dieses Signal kann ein Quittungssignal des adressierten Verbrauchers, eine Störungsinformation in binärer Form oder dergleichen sein.

Weiterhin ist es möglich, daß die dargestellten Ausführungsbeispiele nach Figuren 4 bis 6 und 8 miteinander kombiniert werden, so daß je nach zu übertragendem Informationssignal das eine oder andere Ausführungsbeispiel oder eine Kombination aus diesen eingesetzt wird.

## Patentansprüche

1. Verfahren zur Steuerung von mit einer Steuerungseinrichtung (1) über elektrische Versorgungsleitungen (2) verbundenen, elektrischen Verbrauchern (3, 4, 5, 6), von denen mehrere parallel zu den Versorgungsleitungen (2) verschaltet sind und wobei ein Steuersignal über die elektrischen Versorgungsleitungen (2) an die elektrischen Verbraucher (3,4,5,6) übertragen wird,
**dadurch gekennzelchnet,**
daß die Steuerungseinrichtung (1) zur Kodierung des Steuersignals eine an den elektrischen Verbraucher (3, 4, 5, 6) über die elektrischen Versorgungsleitungen (2) übertragene Versorgungsspannung (U₀) modifiziert und die Steuerungseinrichtung (1) jeden Verbraucher (3, 4, 5, 6) über eine verbraucherspezifische Adresse anspricht und steuert.

2. Verfahren nach Anspruch 1,
**dadurch gekennzeichnet,**
**daß** zur Modifizierung der übertragenen Versorgungsspannung (Uₒ) diese durch die Steuerungseinrichtung (1) für eine bestimmte Zeitdauer in ihrem Maximalwert (U_{MAX}) verändert und/oder unterbrochen wird und/oder Halbwellen der Versorgungsspannung an den elektrischen Verbraucher durch die Steuerungseinrichtung übermittelt werden.

3. Verfahren nach Anspruch 1 oder 2,
**dadurch gekennzeichnet,**
**daß** zur Kodierung des Steuersignals die Maximalwertveränderung und/oder die Unterbrechung der Versorgungsspannung mehrmals, wenigstens zweimal, hintereinander erfolgt.

4. Verfahren nach wenigstens einem der vorangehenden Ansprüche
**dadurch gekennzeichnet,**
**daß** die Steuerungseinrichtung (1) zwischen zwei aufeinanderfolgenden, zur Kodierung des Steuersignals veränderten Versorgungsspannungsabschnitten (7, 8) jeweils einen unveränderten Versorgungsspannungsabschnitt (9) überträgt.

5. Verfahren nach wenigstens einem der vorangehenden Ansprüche,
**dadurch gekennzeichnet,**
**daß** die Maximalwertveränderung in jedem entsprechenden Versorgungsspannungsabschnitt (7) mit einem festen Wert (ΔU) erfolgt.

6. Verfahren nach wenigstens einem der vorangehenden Ansprüche,
**dadurch gekennzeichnet,**
**daß** die Steuerungseinrichtung (1) zur Kodierung des Steuersignals die Versorgungsspannungsabschnitte (7, 8) mit Maximalwertveränderung oder Versorgungsspannungsunterbrechung mit unterschiedlichen Zeitdauem (t₁, t₂) überträgt.

7. Verfahren nach wenigstens einem der vorangehenden Ansprüche,
**dadurch gekennzeichnet,**
**daß** die Steuerungseinrichtung (1) zur Maximalwertveränderung der Versorgungsspannung (U₀) wenigstens ein stromdurchflossenes Spannungsabfallbauelement (11; 12, 13) ab- oder zuschaltet.

8. Verfahren nach wenigstens einem der vorangehenden Ansprüche,
**dadurch gekennzeichnet,**
**daß** ein dem Verbraucher (3, 4, 5, 6) zugeordnetes Hilfsmodul (14, 15, 16, 17) das über die Versorgungsleitung (2) erhaltene Steuersignal dekodiert.

9. Verfahren nach wenigstens einem der vorangehenden Ansprüche,
**dadurch gekennzeichnet,**
**daß** das Hilfsmodul (14, 15, 16, 17) das Steuersignal dekodiert und digitalisiert.

10. Verfahren nach wenigstens einem der vorangehenden Ansprüche,
**dadurch gekennzeichnet,**
**daß** das Hilfsmodul (14, 15, 16, 17) die Versorgungsspannung im Wechselspannungsbetrieb vor einer Dekodierung des Steuersignals gleichrichtet.

11. Verfahren nach wenigstens einem der vorangehenden Ansprüche,
**dadurch gekennzeichnet,**
**daß** die Steuerungseinrichtung (1) zum Ab-/Zuschalten des Spannungsabfallbauelements (10) zur Versorgungsspannungsunterbrechung eine Schalteinrichtung (18) betätigt.

12. Verfahren nach wenigstens einem der vorangehenden Ansprüche,
**dadurch gekennzeichnet,**
**daß** das Ansprechen des Verbrauchers (3, 4, 5, 6) über das Steuersignal erfolgt.

13. Verfahren nach wenigstens einem der vorangehenden Ansprüche,
**dadurch gekennzeichnet,**
**daß** der Verbraucher (3, 4, 5, 6) in einem ihm zugeordneten Zeitfenster (19, 20, 21, 22) sein Steuersignal empfängt.

14. Verfahren nach wenigstens einem der vorangehenden Ansprüche,
**dadurch gekennzeichnet,**
**daß** der Verbraucher (3, 4, 5, 6) zur Übermittlung von Informationssignalen wenigstens einen Belastungsstromimpuls über die Spannungsversorgungsleitungen (2) an die Steuerungseinrichtung (1) überträgt

15. Verfahren nach wenigstens einem der vorangehenden Ansprüche,
**dadurch gekennzeichnet,**
**daß** die Steuerungseinrichtung bei einer Wechselspannung als Versorgungsspannung (U₀) im bestimmten Takt Halbwellen und Vollwellen an den Verbraucher (3, 4, 5, 6) übermittelt.

16. Verfahren nach wenigstens einem der vorangehenden Ansprüche,
**dadurch gekennzeichnet,**
**daß** positive Halbwellen zwischen Vollwellen der unveränderten Wechselspannung übertragen werden.

17. Verfahren nach wenigstens einem der vorangehenden Ansprüche,
**dadurch gekennzeichnet,**
**daß** die positiven Halbwellen insbesondere mit doppelter Frequenz im Vergleich zu den positiven Anteilen der Wechselspannung übertragen werden und die jeweiligen positiven Halbwellen in Informationssignale für die Verbraucher umgsetzt werden.

18. Schaltungsanordnung (23) mit einer Steuerungseinrichtung (1) und mit dieser über Versorgungsspannungsleitungen (2) verbundenen elektrischen Verbrauchern (3, 4, 5, 6), von denen eine Mehrzahl zu den Versorgungsspannungsleitungen (2) parallel verschaltet sind, wobei die Versorgungsspannung zur Übertragung eines Steuersignals zwischen Steuerungseinrichtung (1) und elektrischen Verbraucher (3, 4, 5, 6) veränderbar ist,
**dadurch gekennzeichnet,**
**daß** zumindest der Steuerungseinrichtung (1) wenigstens ein Spannungsabfallbauelement (10) und/oder eine Schalteinrichtung (18) zur zeitweisen Änderung eines Maximalwertes (Uₘₐₓ) der Versorgungsspannung (U₀) und/oder zur zeitweisen Unterbrechung der Versorgungsspannung zugeordnet ist, wobei jedem Verbraucher (3, 4, 5, 6) eine verbraucherspezifische Adresse zugeordnet ist.

19. Schaltungsanordnung nach Anspruch 18,
**dadurch gekennzeichnet,**
**daß** das Spannungsabfallbauelement (10) durch wenigstens einen wahlweise stromdurchflossenen Widerstand (11) gebildet ist.

20. Schaltungsanordnung nach Anspruch 18 oder 19,
**dadurch gekennzeichnet,**
**daß** das Spannungsabfallbauelement (10) durch wenigstens zwei wahlweise stromdurchflossene antiparallel geschaltete Dioden (12, 13) gebildet ist.

21. Schaltungsanordnung nach wenigstens einem der vorangehenden Ansprüche 18 bis 20,
**dadurch gekennzeichnet,**
**daß** die Schalteinrichtung (18) zum Ab- und Zuschalten das Spannungsabfallbauelements (10) zu diesem parallel verschaltet ist.

22. Schaltungsanordnung nach wenigstens einem der vorangehenden Ansprüche 18 bis 21,
**dadurch gekennzeichnet,**
**daß** die Schalteinrichtung (18) wenigstens einer Spannungsversorgungsleitung (2) zum Ein- und Ausschalten der Versorgungsspannung zugeordnet ist.

23. Schaltungsanordnung nach wenigstens einem der vorangehenden Ansprüche 18 bis 22,
**dadurch gekennzeichnet,**
**daß** die Steuerungseinrichtung (1) zumindest zur Betätigung der Schalteinrichtung (18) zur Kodierung des Steuersignals eine Steuerelektronik (24) aufweist.

24. Schaltungsanordnung nach wenigstens einem der vorangehenden Ansprüche 18 bis 23,
**dadurch gekennzeichnet,**
**daß** die Schalteinrichtung (18) mindestens ein eiektromechanischer oder elektronischer Schalter ist.

25. Schaltungsanordnung nach wenigstens einem der vorangehenden Ansprüche 18 bis 24,
**dadurch gekennzeichnet,**
**daß** die verbraucherspezifische Adresse dem Verbraucher (3, 4, 5, 6) fest oder einstellbar zugeordnet ist.

26. Schaltungsanordnung nach wenigstens einem der vorangehenden Ansprüche 18 bis 25,
**dadurch gekennzeichnet,**
**daß** die verbraucherspezifische Adresse zur Auswahl eines Verbrauchers (3, 4, 5, 6) im Steuersignal enthalten ist.

27. Schaltungsanordnung nach wenigstens einem der vorangehenden Ansprüche 18 bis 26,
**dadurch gekennzeichnet,**
**daß** dem Verbraucher (3, 4, 5, 6) ein Hilfsmodul (14, 15, 16, 17) zur Auswertung des Steuersignals insbesondere extern zugeordnet ist.

28. Schaltungsanordnung nach wenigstens einem der vorangehenden Ansprüche 18 bis 27,
**dadurch gekennzeichnet,**
**daß** das Hilfsmodul (14, 15, 16, 17) im Verbraucher (3, 4, 5, 6) integriert ist.

29. Schaltungsanordnung nach wenigstens einem der vorangehenden Ansprüche 18 bis 28,
**dadurch gekennzeichnet,**
**daß** das Hilfsmodul (14, 15, 16, 17) eine Digitalisiereinrichtung (25) aufweist.

30. Schaltungsanordnung nach wenigstens einem der vorangehenden Ansprüche 18 bis 29,
**dadurch gekennzeichnet,**
**daß** das Hilfsmodul (14, 15, 16, 17) einen Vollweggleichrichter (26) aufweist.

31. Schaltungsanordnung nach wenigstens einem der vorangehenden Ansprüche 18 bis 30,
**dadurch gekennzeichnet,**
**daß** jedem Verbraucher (3, 4, 5, 6) ein Zeitfenster (19, 20, 21, 22) zum Empfang seines Steuersignals zugeordnet ist.

32. Schaltungsanordnung nach wenigstens einem der vorangehenden Ansprüche 18 bis 31,
**dadurch gekennzeichnet,**
**daß** das Spannungsabfallbauelement (10) und/oder die Schalteinrichtung (18) zeitlich variabel von der Steuerungseinrichtung (1) betätigbar sind.

33. Schaltungsanordnung nach wenigstens einem der vorangehenden Ansprüche 18 bis 32,
**dadurch gekennzeichnet,**
**daß** der Verbraucher (3, 4, 5, 6) oder das diesem zugeordnete Hilfsmodul (14, 15, 16, 17) eine Belastungsstromimpulserzeugungseinrichtung zur Übermittlung eines entsprechenden Stromimpulses an die Steuerungseinrichtung (1) aufweisen.

34. Schaltungsanordnung nach wenigstens einem der vorangehenden Ansprüche 18 bis 33,
**dadurch gekennzeichnet,**
**daß** die Steuerungseinrichtung (1) eine Wandlereinrichtung (27) zur Umsetzung des Stromimpulses in ein Informationssignal aufweist.

35. Schaltungsanordnung nach wenigstens einem der vorangehenden Ansprüche 18 bis 34,
**dadurch gekennzeichnet,**
**daß** während der zeitweisen Umwandlung der Versorgungsspannung (U₀) mittels der Schalteinrichtung (18) positive Spannungshalbwellen aus der Versorgungsspannung (U₀) erzeugbar und an die Verbraucher (3, 4, 5, 6) übermittelbar sind.

36. Schaltungsanordnung nach wenigstens einem der vorangehenden Ansprüche 18 bis 35,
**dadurch gekennzeichnet,**
**daß** die Schalteinrichtung (18) im wesentlichen ein zuschalt- und/oder umschaltbarer Gleichrichter ist.

## Claims

1. Method for the control of electrical appliances (3, 4, 5, 6) which are connected to a control device (1) via electrical supply lines (2) and of which several are connected in parallel with the supply lines (2), and wherein a control signal is transmitted via the electrical supply lines (2) to the electrical appliances (3, 4, 5, 6), **characterised in that** for coding the control signal the control device (1) modifies a supply voltage (U₀) transmitted to the electrical appliance (3, 4, 5, 6) via the electrical supply lines (2), and the control device (1) addresses and controls each appliance (3, 4, 5, 6) via an appliance-specific address.

2. Method according to claim 1, **characterised in that**, for modification of the transmitted supply voltage (U₀), the latter is varied in its maximum value (U_{MAX}) and/or interrupted by the control device (1) for a given length of time and/or half waves of the supply voltage are transmitted to the electrical appliance by the control device.

3. Method according to claim 1 or 2, **characterised in that**, for coding of the control signal, variation of the maximum value and/or interruption of the supply voltage takes place repeatedly, at least twice, one after the other.

4. Method according to one or more of the preceding claims, **characterised in that** the control device (1) transmits one unvaried supply voltage section (9) between two successive supply voltage sections (7, 8) varied for coding of the control signal.

5. Method according to one or more of the preceding claims, **characterised in that** variation of the maximum value takes place in each corresponding supply voltage section (7) with a fixed value (ΔU).

6. Method according to one or more of the preceding claims, **characterised in that** for coding of the control signal the control device (1) transmits the supply voltage sections (7, 8) with variation of the maximum value or interruption of the supply voltage with different lengths of time (t₁, t₂).

7. Method according to one or more of the preceding claims, **characterised in that** for variation of the maximum value of the supply voltage (U₀) the control device (1) switches on or off at least one current-carrying voltage drop component (11; 12, 13).

8. Method according to one or more of the preceding claims, **characterised in that** an auxiliary module (14, 15, 16, 17) associated with the appliance (3, 4, 5, 6) decodes the control signal obtained via the supply line (2).

9. Method according to one or more of the preceding claims, **characterised in that** the auxiliary module (14, 15, 16, 17) decodes and digitises the control signal.

10. Method according to one or more of the preceding claims, **characterised in that** the auxiliary module (14, 15, 16, 17) rectifies the supply voltage in a.c. voltage mode before decoding of the control signal.

11. Method according to one or more of the preceding claims, **characterised in that**, for switching on/off the voltage drop component (10) to interrupt the supply voltage, the control device (1) actuates a Switching device (18).

12. Method according to one or more of the preceding claims, **characterised in that** addressing of the appliance (3, 4, 5, 6) takes place via the control signal.

13. Method according to one or more of the preceding claims, **characterised in that** the appliance (3, 4, 5, 6) receives its control signal in a time window (19, 20, 21, 22) assigned to it.

14. Method according to one or more of the preceding claims, **characterised in that** for the transmission of information signals the appliance (3, 4, 5, 6) transmits at least one load current pulse via the voltage supply lines (2) to the control device (1).

15. Method according to one or more of the preceding claims, **characterised in that** in case of an a.c. voltage as the supply voltage (U₀) the control device transmits half waves and full waves to the appliance (3, 4, 5, 6) in a given cycle.

16. Method according to one or more of the preceding claims, **characterised in that** positive half waves are transmitted between full waves of the unvaried a.c. voltage.

17. Method according to one or more of the preceding claims, **characterised in that** the positive half waves are transmitted in particular at double the frequency compared with the positive portions of the a.c. voltage, and the respective positive half waves are converted to information signals for the appliances.

18. Circuit assembly (23) with a control device (1) and with electrical appliances (3, 4, 5, 6) which are connected to the latter via supply voltage lines (2) and of which a plurality are connected in parallel with the supply voltage lines (2), wherein the supply voltage is variable for the transmission of a control signal between control device (1) and electrical appliance (3, 4, 5, 6), **characterised in that** associated with at least the control device (1) is at least one voltage drop component (10) and/or a switching device (18) for temporary variation of a maximum value (Uₘₐₓ) of the supply voltage (U₀) and/or for temporary interruption of the supply voltage, wherein each appliance (3, 4, 5, 6) is assigned an appliance-specific address.

19. Circuit assembly according to claim 18, **characterised in that** the voltage drop component (10) is formed by at least one optionally current-carrying resistor (11).

20. Circuit assembly according to claim 18 to 19,
**characterised in that** the voltage drop component (10) is formed by at least two optionally current-carrying antiparallel-connected diodes (12, 13).

21. Circuit assembly according to one or more of the preceding claims 18 to 20, **characterised in that**, for switching the voltage drop component (10) on and off, the switching device (18) is connected in parallel therewith.

22. Circuit assembly according to one or more of the preceding claims 18 to 21, **characterised in that** the switching device (18) is associated with at least one voltage supply line (2) for switching the supply voltage on and off.

23. circuit assembly according to one or more of the preceding claims 18 to 22, **characterised in that** the control device (1) comprises an electronic control device (24) at least for actuation of the switching device (18) for coding the control signal.

24. Circuit assembly according to one or more of the preceding claims 18 to 23, **characterised in that** the switching device (18) is at least one electromechanical or electronic switch.

25. Circuit assembly according to one or more of the preceding claims 18 to 24, **characterised in that** the appliance-specific address is assigned to the appliance (3, 4, 5, 6) permanently or variably.

26. circuit assembly according to one or more of the preceding claims 18 to 25, **characterised in that** the appliance-specific address for the selection of an appliance (3, 4, 5, 6) is contained in the control signal.

27. Circuit assembly according to one or more of the preceding claims 18 to 26, **characterised in that** an auxiliary module (14, 15, 16, 17) for evaluation of the control signal is assigned to the appliance (3, 4, 5, 6), in particular externally.

28. Circuit assembly according to one or more of the preceding claims 18 to 27, **characterised in that** the auxiliary module (14, 15, 16, 17) is integrated in the appliance (3, 4, 5, 6).

29. Circuit assembly according to one or more of the preceding claims 18 to 28, **characterised in that** the auxiliary module (14, 15, 16, 17) comprises a digitising device (25).

30. Circuit assembly according to one or more of the preceding claims 18 to 29, **characterised in that** the auxiliary module (14, 15, 16, 17) comprises a full-wave rectifier (26).

31. Circuit assembly according to one or more of the preceding claims 18 to 30, **characterised in that** each appliance (3, 4, 5, 6) is assigned a time window (19, 20, 21, 22) for the reception of its control signal.

32. Circuit assembly according to one or more of the preceding claims 18 to 31, **characterised in that** the voltage drop component (10) and/or the switching device (18) can be actuated by the control device (1) variably in time.

33. Circuit assembly according to one or more of the preceding claims 18 to 32, **characterised in that** the appliance (3, 4, 5, 6) or the auxiliary module (14, 15, 16, 17) associated with it comprise a load current pulse generating device for the transmission of a corresponding current pulse to the control device (1).

34. Circuit assembly according to one or more of the preceding claims 18 to 33, **characterised in that** the control device (1) comprises a transducer device (27) for conversion of the current pulse to an information signal.

35. Circuit assembly according to one or more of the preceding claims 18 to 34, **characterised in that** during temporary transformation of the supply voltage (U₀) by means of the switching device (18) positive voltage half waves can be generated from the supply voltage (U₀) and transmitted to the appliances (3, 4, 5, 6).

36. Circuit assembly according to one or more of the preceding claims 18 to 35, **characterised in that** the switching device (18) is essentially a rectifier which can be switched on and/or over.

## Revendications

1. Procédé pour commander des consommateurs électriques (3, 4, 5, 6) à l'aide d'unité de commande (1) par des lignes d'alimentation électrique (2), dont plusieurs sont branchés en parallèle sur les lignes d'alimentation (2) et dans lequel un signal de commande est transmis par les lignes d'alimentation électrique (2) aux consommateurs électriques (3, 4, 5, 6), **caractérisé en ce que** l'unité de commande (1) modifie une tension d'alimentation (U₀) transmise au consommateur électrique (3, 4, 5, 6) par les lignes d'alimentation électrique (2) afin de coder le signal de commande et l'unité de commande (1) déclenche et commande chaque consommateur (3, 4, 5, 6) par une adresse spécifique du consommateur.

2. Procédé selon la revendication 1, **caractérisé en ce que**, pour modifier la tension d'alimentation transmise (U₀), celle-ci est changée et/ou interrompue par l'unité de commande (1) pour un laps de temps déterminé dans sa valeur maximale (U_{MAX}) et/ou des demi-ondes de la tension d'alimentation sont envoyées au consommateur électrique par l'unité de commande.

3. Procédé selon la revendication 1 ou 2, **caractérisé en ce que**, pour coder le signal de commande, le changement de valeur maximale et/ou l'interruption de la tension d'alimentation est effectué(e) plusieurs fois, au moins deux fois, l'une après l'autre.

4. Procédé selon au moins une des revendications précédentes, **caractérisé en ce que** l'unité de commande (1) transmet chaque fois un segment de la tension d'alimentation inchangé (9) entre deux segments successifs de la tension d'alimentation (7, 8) changés pour coder le signal de commande.

5. Procédé selon au moins une des revendications précédentes, **caractérisé en ce que** le changement de valeur maximale est effectué dans chaque segment de la tension d'alimentation (7) avec une valeur fixe (ΔU).

6. Procédé selon au moins une des revendications précédentes, **caractérisé en ce que** l'unité de commande (1) transmet les segments de la tension d'alimentation (7, 8) avec un changement de valeur maximale ou une interruption de la tension d'alimentation avec des durées différentes (t₁, t₂) pour coder le signal de commande.

7. Procédé selon au moins une des revendications précédentes, **caractérisé en ce que** l'unité de commande (1) débranche ou branche au moins un composant abaisseur de tension (11, 12, 13) parcouru par un courant pour changer la valeur maximale de la tension d'alimentation (U₀).

8. Procédé selon au moins une des revendications précédentes, **caractérisé en ce qu'**un module auxiliaire (14, 15, 16, 17) associé au consommateur (3, 4, 5, 6) décode le signal de commande reçu par la ligne d'alimentation (2).

9. Procédé selon au moins une des revendications précédentes, **caractérisé en ce que** le module auxiliaire (14, 15, 16, 17) décode et numérise le signal de commande.

10. Procédé selon au moins une des revendications précédentes, **caractérisé en ce que** le module auxiliaire (14, 15, 16, 17) redresse la tension d'alimentation, en cas de fonctionnement sous tension alternative, avant un décodage du signal de commande.

11. Procédé selon au moins une des revendications précédentes, **caractérisé en ce que** l'unité de commande (1) actionne un dispositif de commutation (18) pour débrancher/brancher le composant abaisseur de tension (10) en vue d'interrompre la tension d'alimentation.

12. Procédé selon au moins une des revendications précédentes, **caractérisé en ce que** le déclenchement du consommateur (3, 4, 5, 6) est effectué par le signal de commande.

13. Procédé selon au moins une des revendications précédentes, **caractérisé en ce que** le consommateur (3, 4, 5, 6) reçoit son signal de commande dans une fenêtre de temps (19, 20, 21, 22) qui lui est associée.

14. Procédé selon au moins une des revendications précédentes, **caractérisé en ce que** le consommateur (3, 4, 5, 6) transmet au moins une impulsion de courant de charge par les lignes d'alimentation de tension (2) à l'unité de commande (1) en vue de la transmission de signaux d'information.

15. Procédé selon au moins une des revendications précédentes, **caractérisé en ce que** l'unité de commande transmet à un rythme déterminé des demi-ondes ou des ondes pleines au consommateur (3, 4, 5, 6), dans le cas où la tension d'alimentation (U₀) est une tension alternative.

16. Procédé selon au moins une des revendications précédentes, **caractérisé en ce que** l'on transmet des demi-ondes positives entre des ondes pleines de la tension alternative inchangée.

17. Procédé selon au moins une des revendications précédentes, **caractérisé en ce que** l'on transmet les demi-ondes positives en particulier avec une fréquence doublée par rapport aux fractions positives de la tension alternative et **en ce que** l'on convertit les demi-ondes positives respectives en signaux d'information pour les consommateurs.

18. Circuit (23) avec une unité de commande (1) et avec des consommateurs électriques (3, 4, 5, 6) raccordés à celle-ci par des lignes de tension d'alimentation (2), dont une pluralité sont branchés en parallèle sur les lignes de tension d'alimentation (2), dans lequel la tension d'alimentation peut être changée pour la transmission d'un signal de commande entre l'unité de commande (1) et les consommateurs électriques (3, 4, 5, 6), **caractérisé en ce qu'**au moins à l'unité de commande (1) est associé à au moins un composant abaisseur de tension (10) et/ou un dispositif de commutation (18) pour le changement temporaire d'une valeur maximale (UMAX) de la tension d'alimentation (U₀) et/ou pour l'interruption temporaire de la tension d'alimentation, dans lequel une adresse spécifique du consommateur est associée à chaque consommateur (3, 4, 5, 6).

19. Circuit selon la revendication 18, **caractérisé en ce que** le composant abaisseur de tension (10) est formé par au moins une résistance (11) parcourue par un courant au choix.

20. Circuit selon la revendication 18 ou 19, **caractérisé en ce que** le composant abaisseur de tension (10) est formé par au moins deux diodes (12, 13) montées en antiparallèle, parcourues par un courant au choix.

21. Circuit selon au moins une des revendications précédentes 18 à 20, **caractérisé en ce que** le dispositif de commutation (18) pour débrancher/brancher le composant abaisseur de tension (10) est monté en parallèle sur celui-ci.

22. Circuit selon au moins une des revendications précédentes 18 à 21, **caractérisé en ce que** le dispositif de commutation (18) est associé à au moins une ligne d'alimentation de tension (2) pour connecter et déconnecter la tension d'alimentation.

23. Circuit selon au moins une des revendications précédentes 18 à 22, **caractérisé en ce que** l'unité de commande (1) présente au moins une électronique de commande (24) pour actionner le dispositif de commutation (18) pour coder le signal de commande.

24. Circuit selon au moins une des revendications précédentes 18 à 23, **caractérisé en ce que** le dispositif de commutation (18) est au moins un interrupteur électromécanique ou électronique.

25. Circuit selon au moins une des revendications précédentes 18 à 24, **caractérisé en ce que** l'adresse spécifique du consommateur est associée au consommateur (3, 4, 5, 6) de manière fixe ou réglable.

26. Circuit selon au moins une des revendications précédentes 18 à 25, **caractérisé en ce que** l'adresse spécifique du consommateur destinée à sélectionner un consommateur (3, 4, 5, 6) est contenue dans le signal de commande.

27. Circuit selon au moins une des revendications précédentes 18 à 26, **caractérisé en ce qu'**un module auxiliaire (14, 15, 16, 17) est associé, en particulier extérieurement, au consommateur (3, 4, 5, 6) pour l'identification du signal de commande.

28. Circuit selon au moins une des revendications précédentes 18 à 27, **caractérisé en ce que** le module auxiliaire (14, 15, 16, 17) est intégré dans le consommateur (3, 4, 5, 6).

29. Circuit selon au moins une des revendications précédentes 18 à 28, **caractérisé en ce que** le module auxiliaire (14, 15, 16, 17) présente un dispositif de numérisation (25).

30. Circuit selon au moins une des revendications précédentes 18 à 29, **caractérisé en ce que** le module auxiliaire (14, 15, 16, 17) présente un redresseur pleine-onde (26).

31. Circuit selon au moins une des revendications précédentes 18 à 30, **caractérisé en ce qu'**une fenêtre de temps (19, 20, 21, 22) est associée à chaque consommateur (3, 4, 5, 6) pour la réception de son signal de commande.

32. Circuit selon au moins une des revendications précédentes 18 à 31, **caractérisé en ce que** le composant abaisseur de tension (10) et/ou le dispositif de commutation (18) peuvent être actionnés de façon variable dans le temps par l'unité de commande (1).

33. Circuit selon au moins une des revendications précédentes 18 à 32, **caractérisé en ce que** le consommateur (3, 4, 5, 6) ou le module auxiliaire (14, 15, 16, 17) associé à celui-ci présentent un dispositif de production d'une impulsion de courant de charge pour la transmission d'une impulsion de courant correspondante à l'unité de commande (1).

34. Circuit selon au moins une des revendications précédentes 18 à 33, **caractérisé en ce que** l'unité de commande (1) présente un dispositif convertisseur (27) pour la conversion de l'impulsion de courant en un signal d'information.

35. Circuit selon au moins une des revendications précédentes 18 à 34, **caractérisé en ce que**, pendant la conversion temporaire de la tension d'alimentation (U₀) au moyen du dispositif de commutation (18), des demi-ondes de tension positives peuvent être produites à partir de la tension d'alimentation (U₀) et transmises aux consommateurs (3, 4, 5, 6).

36. Circuit selon au moins une des revendications précédentes 18 à 35, **caractérisé en ce que** le dispositif de commutation (18) est essentiellement un redresseur pouvant être connecté et/ou commuté.
